# EUROPEAN PATENT SPECIFICATION

(11) **EP 3 870 767 B1**
(45) Date of publication and mention of the grant of the patent: **11.10.2023**
(21) Application number: 19876798.0
(22) Date of filing: 21.08.2019
(51) Int. Cl.: E04B 5/02, B62D 25/20, B60P 1/28, B62D 33/02, B62D 33/077, E04B 5/10

(54) **SEAMLESSLY-ASSEMBLED DUMPER VESSEL FLOOR PANEL**
NAHTLOS MONTIERTE KIPPERBEHÄLTERBODENPLATTE
PANNEAU DE PLANCHER DE CUVE À BENNE BASCULANTE ASSEMBLÉ SANS JOINT

(30) Priority: 23.10.2018 TR 201815826
(43) Date of publication of application: 01.09.2021
(73) Proprietor: Tirsan Treyler Sanayi Ve Ticaret Anonim Sirketi, 54010 Arifiye/Sakarya (TR)
(72) Inventor: UZÇAKAR, Yasemin, 54010 Sakarya (TR)
(74) Representative: Yamankaradeniz, Kemal
(86) International application number: PCT/TR2019/050693
(87) International publication number: WO 2020/086029

(56) References cited:
- EP-A1- 1 757 848
- CN-A- 104 691 631
- GB-A- 1 455 564
- GB-A- 2 529 745
- TR-A2- 201 809 313
- TR-A2- 201 809 313
- US-A- 3 909 059
- US-A- 4 631 891
- US-A- 5 403 063
- US-A- 5 791 726
- US-A- 6 082 810

## Description

### Technical Field

The invention relates to the floor construction of the aluminum box type dumper trucks used for the transportation of the construction materials, excavation and ruin waste and fine granular materials for mining in main road and off-road conditions.

The invention specifically relates to the floor construction of the dumper vessel created by combining solid-manufactured profiles.

### Prior Art

Nowadays, the aluminum box type dumper trucks are being used for transportation of the construction materials, excavation and ruin waste, and fine granular materials for mining in main road and off-road conditions. The dumper trucks have the structure called basin or body at their back, which carries the load.

The floor parts of the dumper vessel embodiment employed in the prior art are formed with the method of welding the reinforcement crosses welded lengthwise on the lower section of a floor sheet to the floor sheet. Because of this design, failure to carry out the welding process properly especially in the areas where the floor reinforcement crosses are welded to the floor sheet, and under overloading conditions, cracks occur in the floor crosses and the floor sheets. Moreover, plastic deformations are encountered in these parts.

In the state of the art, weld shrinkages are observed after welding because of the distance between the floor reinforcement crosses and the floor sheet in the interiors of the basin being too long. This, in turn, results in the formation of faux pas and failures.

The faux passes observed in the state of the art deteriorates the floor sheet planarity, causing the load to adhere the internal surface of the dumper vessel, and prevents effective discharge of the load, especially when transporting sticky loads. As a result of adherence of transported load, when the dumper raises, an imbalance of load occurs, rising the tipping over the risk of the dumper vessel.

Furthermore, since the load cannot be completely discharged because he load adheres to the floor of the dumper, the vehicle's curb weight increases, thus increasing the fuel consumption.

In the state of the art, all the cross-sections of the floor reinforcement crosses are designed as open "V" or "U" shapes. In this design, the floor reinforcement crosses and the floor sheet are joined by applying the welding method. This means that the inlets of the floor reinforcement crosses are of open shape. Since the reinforcement crossings have an open end, bevel ends are applied to the crosses between two welding methods, causing the crosses to be deformed. In this case, the load amounts of the floor reinforcement cross to the method weldings increase, causing above-mentioned cracks and deformations.

In the state of the art, an elastic wedge is affixed to the lower section of the floor reinforcement crosses so that it is located between the chassis and the basin. Since these elastic wedges are adhered, and have no any geometrical connection to the floor crossing, they detach over time. Rupture of the elastic wedges causes the basin to sit on the chassis, and since impact damping effect of these elastic wedges disappears, the basin gets damaged as a result of fatigue effect.

In the state of the art, the floor sheet thicknesses are generally within 6-7 mm range. If the floor reinforcement cross range narrows in order to provide required resistance values, the floor thickness can be reduced down to 6 mm. However, since the distance between the reinforcement crosses increase, the weight increases in proportion to an additional number of crosses, and foreseen weight advantage cannot be provided. This, in turn, prevents decreasing the dumper dry weights in the required ratio.

In the state of the art, the floor crosses and the floor sheets are very difficult to repair when they get damaged because of their welded structure. Therefore, the amendment method is applied by putting amendment parts with additional welding on damaged regions. This, in turn, gives rise to an increase in the vehicle's curb weight.

In the state of the art, since the floor supporting cross and the floor sheet do not include elements, which makes sure they are borne one another, and positioned according to the measurement, they are pre-installed to one another before the welding and welded after they are positioned according to the measured values. This, in turn, increases the installation time, thus increasing the labor costs.

In the state of the art, the quality problems arising from failure to adequately apply the welding process.

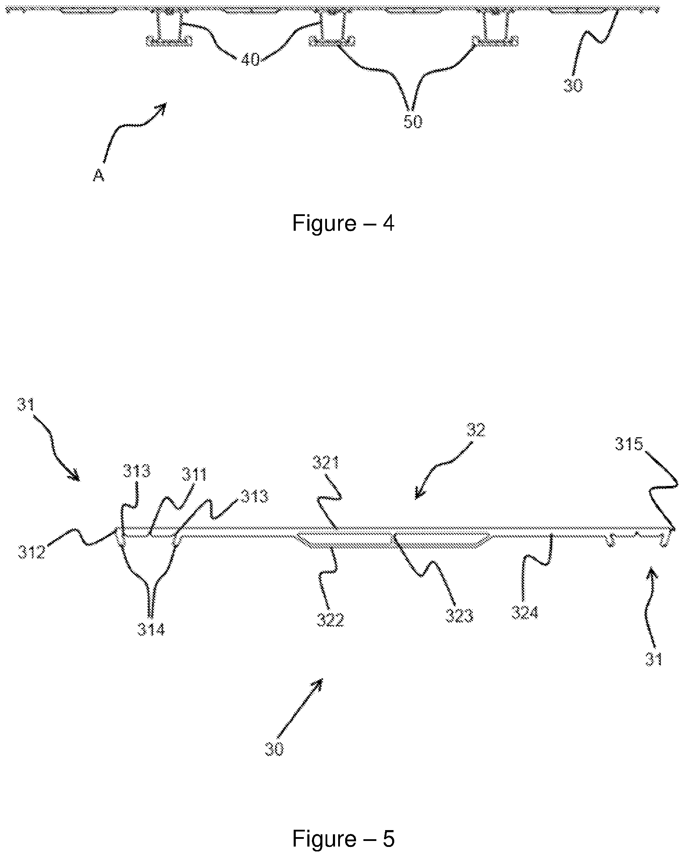

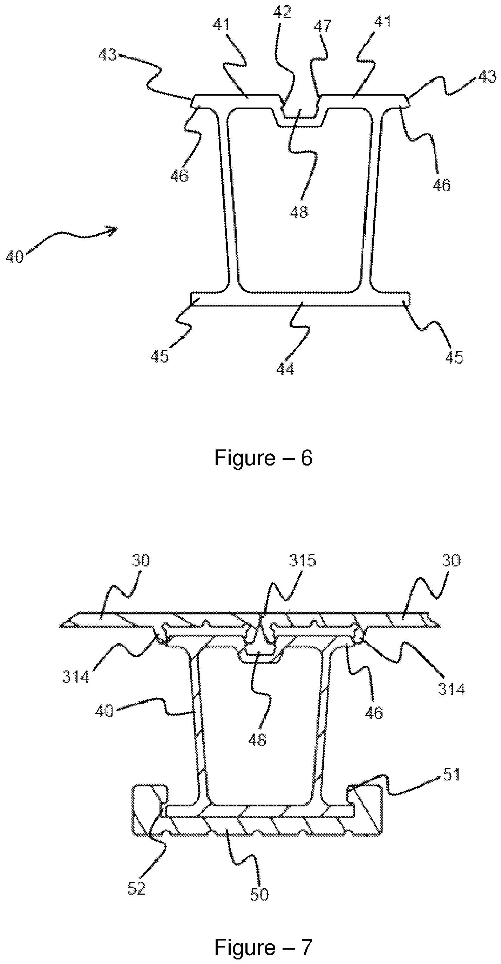

As a result of the studies carried out in the literature, we encounter various embodiments related to said damper bodies. One of them is the utility model with title "The strong lightweight dumper body for trailers with dumper" and application number TR2007/06901. In the summary of the invention having the ranking class B60P 3/00, the expression "It is made sure that the trailer with dumper is lighter weight and more resistant by putting aside chassis profile getting thicker from the ends to the center on the side edges where the forces applied by the load to the side and floor sections are intersected in the lower chassis of the lift frame of the trailer having mechanical unloading system referred as trailer with dumper, which is connected to the tow truck in transportation (Figure 4), providing a clear endurance as a result of strictly connecting the strut profile reinforcements (Figure 5), which provide support when reinforcing the strut profiles to the floor sheet and the transversal insert profiles (and the side chassis profiles), using the strut profile bed reinforcement to make sure the strut profile beds keep their shapes for a long time (Figure 4), and using an inward cascaded and side profile-supported lightweight cover (Figure 7)." is included.

In this application, the transversal insert profiles are employed to support from below the floor of the dumper vessel. Since these profiles are fixed with the welding method, the above mentioned disadvantageous are encountered.

Another example regarding the above-mentioned embodiment is the utility model with title "Bolted Dumper" and application number TR2015/11861. In the summary of of the invention with ranking class B60P 3/00, the expression "The invention relates to a bolted dumper embodiment, which has been developed in order to provide convenience in transportation and installation of the dumpers employed for load-carrying in excavation, mining, construction, etc. fields, making sure possible damages and breakdowns that may occur during transport are repaired with less workmanship and more easily. It makes sure the installation is carried out with the floor sheet, side sheet, front sheet, skirt sheet, guard sheet, guard support sheet, upper support sheet, vertical support sheet, side connection sheet, upper support exterior sheet, upper support interior sheet, the bolt fixing holes included in the parts, and with the help of bolt." is included.

As for this application, the floor of the dumper vessel consists of a solid sheet element. Together with this sheet, slanted sheets were used on the side sections, and were connected to the sides of the basin. This, in turn, restricts the possibility to intervene on the floor as a result of deformation.

Another example of a floor of a box of a dumper truck is known from TR 2018 09313 A2. This document discloses the preamble of claim 1.

Owing to mentioned negativities for the above applications, these applications can be given as examples for some drawbacks mentioned above.

As a result, many improvements are implemented in parallel to developing technology in dumper vessels, thus new embodiments are needed in order to eliminate the above-mentioned disadvantages and deliver solution to existing systems.

### The object of the Invention

Unlike the embodiments employed in the state of art, the invention relates to the dumper vessels, which have been developed aimed at resolving the mentioned disadvantages, and introducing some additional advantages.

The invention is set out in the appended set of claims.

The object of the Invention is to use floor panel profiles, whose floor sheet and reinforcement cross have been integrated with one another, and connected one another with the interlocking method. By this means, the welding labor costs are eliminated. It shortens the installation time thanks to the interlocking method.

Another object of the invention is to avoid the after-sales and quality problems resulting from failure to carry out the welding process properly.

Another object of the invention is to strengthen the centre of the floor panel. Deformations in the centre will be avoided thanks to this reinforcement.

Another object of the invention is to prevent dents and sinkages in the central sections thanks to the section study, employed in the centre of the floor panel for reinforcement purpose, and providing an increase in endurance. By this means, adherence of the carried load to the floor of the dumper is prevented. And thanks to this improvement, when the dumper is emptied, the load will be discharged rapidly without adhering, overturning that can arise as a result of load adhesion will be prevented, and the increase in the fuel consumption when the vehicle is empty resulting from load adherence will be avoided.

Another object of the invention is to eliminate the need for the method welding application since the floor panel cross part is a closed section. By this means, the opening of the mouth of the cross between method weldings, and occurrence of faux passes on the floor will be prevented. This, in turn, will avoid deformations, which advance on the weld crack on the part.

Another object of the invention is to prevent the formation of faux pas because of welding shrinkage on the interior of the floor since the welding process will not be carried out. By this means, the floor of the dumper will be smoother visually, and the sticking problems caused by the faux passes will be avoided.

Another object of the invention is to make sure that the floor reinforcement can be applied less frequently since it has a section structure, which provides the advantage of auto-endurance at the centre of the floor. Less deflection shall be provided in the central sections, thus weight advantage will possibly be provided by decreasing the part thicknesses. Another object of the invention is to ease the maintenance and repair works thanks to the joining system with the method of interlocking the floor panels. The damaged area will be displaced without need for additional repairing part, a new panel will be placed in lieu of it, and thus the problem will be resolved with fast and cheap workmanship.

Another aspect of the invention is the fact that since the floor panels contain bearing elements, which make sure they are borne geometrically one another, an installing operation before production is not needed. By this means, the manufacturing cost is decreased again. Another object of the invention is to apply design, which provides geometrical bearing between the elastic wedge positioned in the floor panel cross part, and the floor panel. Owing to this design, the problems such as rupture and damage of the elastic wedge experienced in the prior art will be prevented.

The structural characteristic properties of the invention, along with all the advantages can be more clearly understood thanks to the figures below and the related detailed explanations. Which is why an evaluation shall be made considering those figures and detailed explanations.

### Short Description of the Figures for Better Understanding the Invention

Figure - 1 shows the perspective view of the box type dumper truck.
Figure - 2 shows the perspective view of the dumper vessel.
Figure - 3 shows the perspective view of a section of the floor structure of the dumper vessel.
Figure - 4 shows the assembled cutaway view of a section of the floor structure of the dumper vessel.
Figure - 5 shows the cutaway view of the floor panel of the invention.
Figure - 6 shows the cutaway view of the floor profile that unites the floor panels.
Figure - 7 shows the cutaway view of the combination of two pcs floor panels, the floor profile and the elastic wedge.

### Reference Numbers

- A.: The floor structure
- 1.: Box type dumper truck
- 10.: Dumper vessel
11. Lower fascia
- 20.: Dumper chassis
- 30.: Floor panel
31. Floor panel side section
311. Central flexion discharge
312. Side bearing cove
313. Edge flexion discharge
314. Bearing pawl
315. Side bearing overhang
32. Floor panel centre reinforcement section
321. Floor panel slim surface
322. Floor panel intermediate cross part
323. Cross part reinforcement
324. Floor panel thick surface
- 40.: Floor profile
41. Floor profile top seating surface
42. Floor profile internal sliding surface overhang
43. Floor profile external sliding surface
44. Floor profile bottom seating surface
45. Wedge bearing overhang
46. Floor profile external sliding surface overhang
47. Floor profile internal sliding surface
48. Pawl recess
- 50.: Elastic wedge
51. Wedge overhang
52. Bearing overhang gap

### Detailed Explanation of an Example of the Invention

### Construction principle;

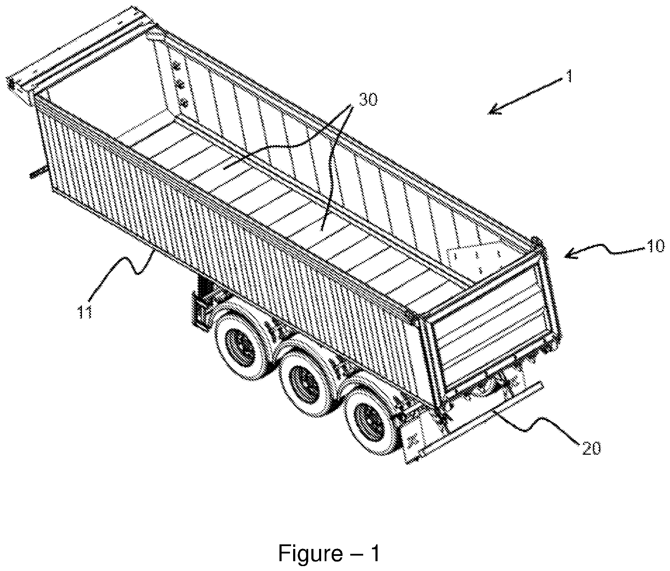

The box type dumper truck (1) generally consists of the dumper vessel (10) and the dumper chassis 20). Figure 1 shows the perspective view of the box type dumper truck (1). The dumper chassis (20) is the main structure, in which the dumper vessel (10) is seated and fixed.

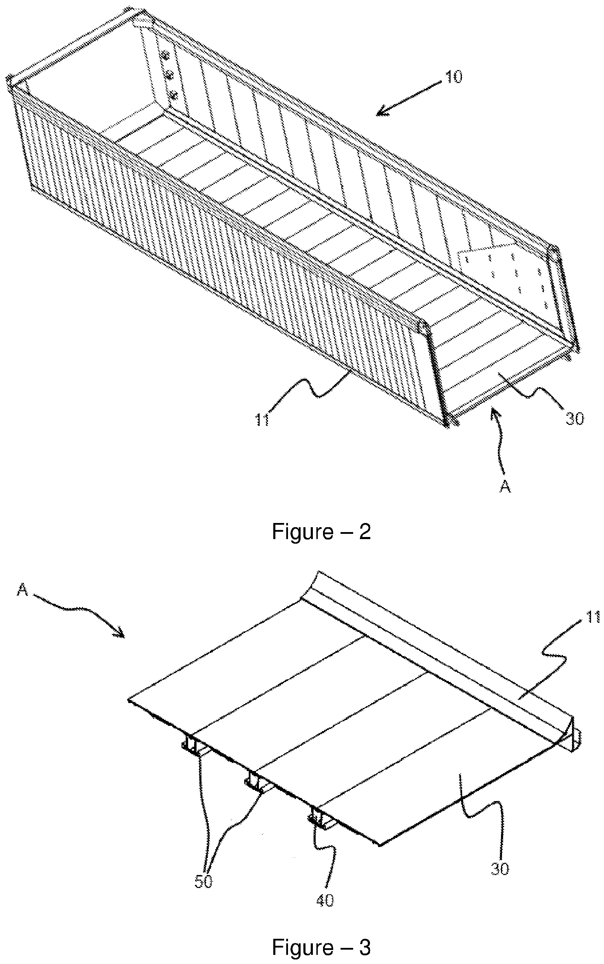

The floor panel (30) of the invention is the element that forms the floor structure (A) of the dumper vessel (10). Figure 2 shows the dumper vessel (10) consisting of the floor panels (30) and the floor structure (A).

The lower fascia (11) is used for fixing the floor panels (30) to the dumper vessel (10).

The lower fascia (11) is the main strength supporting the lower part of the dumper vessel (10). It ensures that the floor panels (30) are borne from below to the dumper vessel (10). It ensures that the horizontal and vertical forces are carried at the lower section.

Mentioned floor panel (30) consists of the floor panel side sections (31) and the floor panel centre reinforcement section (32). Figure 5 shows the cutaway view of the floor panel (30). The floor panel side section (31) is composed of the central flexion discharge (311), the side bearing cove (312), the edge flexion discharge (313), bearing pawl (314), and the side bearing overhang (315).

The central flexion discharge (311) is the part created in the side central sections in order to make sure that the floor profile (40) carries out an elastic flexion under effect of the force it applies to the floor panel (30), thus it is intertwined, and to reduce the profile section weight. The side bearing cove (312) is the part, which is formed at the end part of one side of the floor panel (30), and makes sure that the floor profiles (40) are borne one another geometrically with the interlocking method.

The edge flexion discharge (313) is formed in the side sections in order to make sure that the floor profile (40) carries out an elastic flexion under effect of the force it applies to the floor panel (30), thus it is intertwined, and to reduce the profile section weight.

The bearing pawls (314) are the projections, which make sure that the floor profile (40) is borne geometrically to the floor panel (30), and they are interconnected with form connection, and which are formed at the end sections of the floor panel (30).

The floor panel centre reinforcement section (32) consists of the floor panel slim surface (321), the floor panel intermediate cross part (322), cross part reinforcement (323), and the floor panel thick surface (324).

The floor panel slim surface (321) is located on top of the floor panel centre reinforcement section (32). This part is the surface, on which impact, wear and force effects of the load are born.

The panel intermediate cross part (322) is the part, which is integrated into the floor profile centre reinforcement section (32) in order to meet the impact resistance, deformation, and endurance requirements between 2 floor panels (30).

The cross part reinforcement (323) is used for the central part of the floor panel (30) to gain endurance.

The floor panel thick surface (324) is the part located between the floor panel side sections (31) and the floor panel centre reinforcement section (32), and bears the impact, abrasion and force effects of the load.

The floor profile (40) is used to connect side by side the two floor profiles (30). The floor profile (40) is the element located beneath the floor panels (30), on which the loads loaded in the dumper vessel (10), thus supporting the floor panels (30) lengthwise for endurance purpose. Moreover, it is the element, which supports bearing the vertical force created by the load.

The floor profile (40) consists of the floor profile top seating surface (41), the floor profile internal sliding surface overhang (42), the floor profile external sliding surface (43), the floor profile bottom seating surface (44), the wedge bearing overhang (45), and the floor profile external sliding surface overhang (46). Figure 6 shows the cutaway view of the floor profile (40).

The floor profile top seating surface (41) is the part, which makes sure the floor panel (30) sits in the floor profile (40) on a level surface.

The floor profile internal sliding surface overhang (42) provides for a geometrical form connection with the bearing pawl (314), thus making sure a seamless connection between the floor panel (30) and the floor profile (40).

The floor profile bottom sliding surface (43)is the surface, which is used for the floor panel (30) and the floor profile (40) to be able to connect one another with form connection under the force effect as a result of its tapered geometrical shape.

The floor profile bottom seating surface (44) makes sure that the elastic wedge (50) sits in the floor profile (40) on a level surface.

The wedge bearing overhang (45) is the male element, which makes sure the floor profile (40) and the elastic wedge (50) are borne one another geometrically with the interlocking method.

The floor profile external sliding surface overhang (46) is the part, which, after connection of the floor profile (40) and the floor panel (30), prevents these parts from interlocking each other, and deterioration of the form connection under load effect.

The elastic wedge (50) acts as an impact dampener between the dumper chassis (20) and the dumper vessel (10). By this means, it avoids the cracks, which may occur in the dumper vessel (10) elements under the impact and fatigue effects. In the upper parts of the elastic wedge (50), wedge overhangs (51) were created in order to lock the floor profile (40). In the inner sections of the wedge overhangs (51), the bearing overhang cavities (52) are formed, in which the wedge bearing overhangs (45) will be inserted.

Mentioned floor panel (30) and the floor profile (40) are the elements that create the floor structure (A).

### Installing principle;

First of all, two floor panels (30) are brought side by side for installing the floor panels (30) that form the floor structure (A) of the dumper vessel (10). The side bearing cove (312) of one of the floor panels (30) brought side by side and the side bearing overhang (315) of the other floor panel (30) are aligned and seated. This seating process is shown in Figure 7. Thereafter, the floor profile (40) is used to secure two floor panels (30) together. The floor panel side sections (31) of mentioned floor panels (30) are placed on the floor profile top seating surface (41) of the floor profile (40).

During positioning, the bearing pawls (314) located in the floor panel side part (31) slides on the floor profile external sliding surface (43) and the floor profile internal sliding surface (47), which are formed onto the floor profile (40). By sliding this way, one of the bearing pawls (314), which is on the outside is engaged in the external sliding surface overhang (46), and the other bearing pawl (314), which is on the inside is engaged in the floor profile internal sliding surface overhang (42), thus making sure the interlocking. After this operation, the bearing pawls (314) seats in the pawl recess (48) located above the floor profile (40).

The same operation takes place on the other floor panel (30). Figure 7 clearly shows the state of two floor profiles (30) interconnected by placing them in the floor profile (40).

An elastic wedge (50) is inserted in the bottom of each floor profile (40). For this operation, the wedge bearing overhang (45) of the floor profile (40) is inserted in one of the bearing overhang cavities (52) of the elastic wedge (50). Thereafter, the wedge bearing overhang (45) on the other side of the floor profile (40) is inserted in the idle bearing overhang gap (52) of the elastic wedge (50). By this means, the floor profile (40) is inserted in the elastic wedge (50). With this insertion, the floor profile bottom seating surface (44) engages onto the elastic wedge (50) and the wedge overhangs (51) lock the floor profile (40). Figure 7 shows a detailed view of the floor profile (40) as placed on the elastic wedge (50).

During mentioned assembly operations, each floor panel (30) is also connected with the lower fascias (11) located in the bottom corner sections of the dumper vessel (10). Complete setup of the construction is provided by fixing the floor panels (30), which are fixed to each other side by side also to the dumper vessel (10) with the lower fascia (11). Figure 3 shows the relation of the lower fascia (11) with the floor panels (30).

With above-mentioned installing principle, placement of the floor panels (30) is realized across the dumper vessel (10). Figure 4 shows a cutaway view of the 4 floor panels (30) as installed to one another by using the floor profile (40). As mentioned, the floor panels (30) are fixed together with the floor profiles (40), then seated onto the dumper chassis (20) with the elastic wedges (50), thus creating the floor structure (A).

In case of any problem occurring in the dumper vessel (10) floor structure (A) after usage, the floor panel (30) related to the problem is dismantled, and the failure is responded immediately.

## Claims

1. The floor structure (A), which is positioned on the dumper chassis (20) in the box type dumper trucks (1), and forms the floor of the dumper vessel (10) where the load to be transported is stored; and connected with the elastic wedge (50) placed on mentioned dumper chassis (20), and absorbs the vibrations to be transmitted to the dumper vessel (10), wherein it comprises;
• The solid floor panel (30), which is extended crosswise on the dumper vessel (10) ground, and having been positioned and combined side by side throughout all the floor, forms the floor structure (A) of the dumper vessel (10),
• The floor profile (40), which interconnects mentioned floor panels (30), and by connecting it with the elastic wedge (50), positioned on the dumper chassis (20),
• wherein said floor panel (30) comprises the floor panel side section (31), which is the section where it is combined with the floor profile (40), and on which the interlocking elements are formed,
**characterised in that**
said floor profile (40) comprises the central flexion discharge (311), which is formed in the floor panel side sections (31) in order to make sure that it carries out an elastic flexion under effect of the force it applies to the floor panel (30), thus it is intertwined, and to reduce the profile section weight.

2. The floor structure (A) according to claim 1, wherein it comprises side bearing cove (312), which is formed at the end part of one side of the floor panel side sections (31), and makes sure that the floor panels (30) are borne one another geometrically with the interlocking method.

3. The floor structure (A) according to claim 2, wherein said floor profile (40) comprises the edge flexion discharge (313), which is formed in the floor panel side sections (31) in order to make sure that it carries out an elastic flexion under effect of the force it applies to the floor panel (30), thus it is intertwined, and to reduce the profile section weight.

4. The floor structure (A) according to claim 2, wherein it comprises the bearing pawl (314), which makes sure that the floor profile (40) is borne geometrically to the floor panel (30), and they are interconnected with form connection, and which are formed at the end sections of the floor panel (30).

5. The floor structure (A) according to claim 4, wherein it comprises the side bearing overhang (315), which is seated in said side bearing cove (312), formed in the other floor panel side part (31) of the floor panel (30).

6. The floor structure (A) according to claim 1, wherein it comprises the floor panel centre reinforcement section (32), which is formed in the mid-section of said floor panel (30), and meets the impact resistance, deformation and endurance requirements of the floor panel (30).

7. The floor structure (A) according to claim 6, wherein it comprises the floor panel slim surface (321), which is located on the top of said floor panel centre reinforcement section (32), and bears the impact, wear and force effects of the load in the floor panel centre reinforcement section (32).

8. The floor structure (A) according to claim 6, wherein it comprises the floor panel intermediate cross part (322), which meets the impact resistance, deformation, and endurance requirements between 2 floor panels (30), which is integrated into the floor profile centre reinforcement section (32).

9. The floor structure (A) according to claim 7 and 8, wherein it comprises the cross part reinforcement (323), which is placed between said floor panel slim surface (321) and the floor panel intermediate cross part (322) for supporting purpose.

10. The floor structure (A) according to claim 6, wherein it comprises the floor panel thick surface (324), which is located between the floor panel side sections (31) and the floor panel centre reinforcement section (32), and bears the impact, wear and force effects of the load.

11. The floor structure (A) according to claim 1, wherein it comprises the floor profile top seating surface (41), which makes sure the floor panel (30) sits in the floor profile (40) on a level surface, and which is the upper part of the floor profile (40).

12. The floor structure (A) according to claim 4, wherein it comprises the floor profile internal sliding surface overhang (42), which provides for a geometrical form connection with the bearing pawl (314), thus making sure a seamless connection between the floor panel (30) and the floor profile (40).

13. The floor structure (A) according to claim 1, wherein it comprises the floor profile external sliding surface (43), which is formed in the top side sections of said floor profile (40), and makes sure that the floor panel (30) and the floor profile (40) can interconnect with form connection.

14. The floor structure (A) according to claim 1, wherein it comprises the floor profile bottom seating surface (44), which makes sure that said elastic wedge (50) sits in the floor profile (40) on a level surface.

15. The floor structure (A) according to claim 1, wherein it comprises the wedge bearing overhang (45), which makes sure that said floor profile (40) and the elastic wedge (50) are borne one another geometrically with the interlocking method.

16. The floor structure (A) according to claim 1, wherein it comprises the floor profile external sliding surface overhang (46), which, after connection of said floor profile (40) and the floor panel (30), prevents these parts from interlocking each other, and deterioration of the form connection under load effect.

17. The floor structure (A) according to claim 4, wherein it comprises the floor profile internal sliding surface (47), which makes sure that, as a result of having been pressed from above, said bearing pawl (314) slides and engages in the floor profile internal sliding surface overhang (42).

18. The floor structure (A) according to claim 4, wherein it comprises the pawl recess (48), into which the bearing pawls (314) are seated by giving an inward curvature in the top mid-section of said floor profile (40).

## Patentansprüche

1. Bodenstruktur (A), die bei den Kastenkipper-LKWs (1) auf dem Kipperfahrgestell (20) positioniert ist und den Boden des Kipperbehälters (10) bildet, auf dem die zu transportierende Last gelagert wird; und mit dem elastischen Keil (50) verbunden ist, der auf dem erwähnten Kipperfahrgestell (20) platziert ist, und die auf den Kipperbehälter (10) zu übertragenden Vibrationen absorbiert, wobei sie umfasst;
• Die massive Bodenplatte (30), die quer auf dem Boden des Kipperbehälters (10) ausgestreckt ist und über den gesamten Boden nebeneinander positioniert und verbunden ist, bildet die Bodenstruktur (A) des Kipperbehälters (10),
• Das Bodenprofil (40), das die erwähnten Bodenplatten (30) miteinander verbindet und durch seine Verbindung mit dem elastischen Keil (50) auf dem Kipperfahrgestell (20) positioniert ist,
• wobei die Bodenplatte (30) den Bodenplatten-Seitenabschnitt (31) umfasst, bei dem es sich um den Abschnitt handelt, in dem es mit dem Bodenprofil (40) verbunden wird und an dem die Verriegelungselemente ausgebildet sind,
**dadurch gekennzeichnet, dass**
das Bodenprofil (40) die zentrale Biegungsentlastung (311) umfasst, die in den Bodenplatten-Seitenabschnitten (31) ausgebildet ist, um sicherzustellen, dass es eine elastische Biegung unter der Wirkung der Kraft durchführt, die es auf die Bodenplatte (30) ausübt, und somit ineinandergegriffen ist, und um das Profilabschnittsgewicht zu reduzieren.

2. Bodenstruktur (A) nach Anspruch 1, wobei sie eine seitliche Lagerrundung (312) umfasst, die am Endteil einer Seite der Bodenplatten-Seitenabschnitte (31) ausgebildet ist
und sicherstellt, dass die Bodenplatten (30)
im Verriegelungsverfahren geometrisch gegenseitig getragen werden.

3. Bodenstruktur (A) nach Anspruch 2, wobei das Bodenprofil (40) die Kanten-Biegungsentlastung (313) umfasst, die in den Bodenplatten-Seitenabschnitten (31) ausgebildet ist, um sicherzustellen, dass es eine elastische Biegung unter der Wirkung der Kraft durchführt, die es auf die Bodenplatte (30) ausübt, und somit ineinandergegriffen ist, und um das Profilabschnittsgewicht zu reduzieren.

4. Bodenstruktur (A) nach Anspruch 2, wobei sie die Lagerklinke (314) umfasst, die sicherstellt, dass das Bodenprofil (40) an der Bodenplatte (30) geometrisch getragen wird und sie formschlüssig miteinander verbunden sind, und die an den Endabschnitten der Bodenplatte (30) ausgebildet sind.

5. Bodenstruktur (A) nach Anspruch 4, wobei sie den seitlichen Lagerüberhang (315) umfasst, der in der seitlichen Lagerrundung (312) sitzt, die im anderen Bodenplatten-Seitenteil (31) der Bodenplatte (30) ausgebildet ist.

6. Bodenstruktur (A) nach Anspruch 1, wobei sie den mittleren Bodenplatten-Verstärkungsabschnitt (32) umfasst, der im Mittelabschnitt der Bodenplatte (30) ausgebildet ist und die Anforderungen an Schlagfestigkeit, Verformung und Haltbarkeit der Bodenplatte (30) erfüllt.

7. Bodenstruktur (A) nach Anspruch 6, wobei sie die schlanke Bodenplatten-Oberfläche (321) umfasst, die sich auf der Oberseite des mittleren Bodenplatten-Verstärkungsabschnitts (32) befindet und den Stoß-, Abnutzungs- und Krafteinwirkungen der Last im mittleren Bodenplatten-Verstärkungsabschnitt (32) standhält.

8. Bodenstruktur (A) nach Anspruch 6, wobei sie das Bodenplatten-Zwischenquerteil (322) umfasst, das die Anforderungen an Schlagfestigkeit, Verformung und Haltbarkeit zwischen 2 Bodenplatten (30) erfüllt, welche in den mittleren Bodenplatten-Verstärkungsabschnitt (32) integriert ist.

9. Bodenstruktur (A) nach Anspruch 7 und 8, wobei sie die Querteilverstärkung (323) umfasst, die zu Stützzwecken zwischen der schlanken Bodenplatten-Oberfläche (321) und dem Bodenplatten-Zwischenquerteil (322) platziert ist.

10. Bodenstruktur (A) nach Anspruch 6, wobei sie die dicke Bodenplatten-Oberfläche (324) umfasst, die sich zwischen den Bodenplatten-Seitenabschnitten (31) und dem mittleren Bodenplatten-Verstärkungsabschnitt (32) befindet und den Stoß-, Abnutzungs- und Krafteinwirkungen der Last standhält.

11. Bodenstruktur (A) nach Anspruch 1, wobei sie die obere Bodenprofil-Auflagefläche (41) umfasst, die sicherstellt, dass die Bodenplatte (30) im Bodenprofil (40) auf einer ebenen Fläche sitzt, und die der oberen Teil des Bodenprofils (40) ist.

12. Bodenstruktur (A) nach Anspruch 4, wobei sie den inneren Bodenprofil-Gleitflächenüberhang (42) umfasst, der für einen geometrischen Formschluss mit der Lagerklinke (314) sorgt und somit eine nahtlose Verbindung zwischen der Bodenplatte (30) und dem Bodenprofil (40) sicherstellt.

13. Bodenstruktur (A) nach Anspruch 1, wobei sie die äußere Bodenprofil-Gleitfläche (43) umfasst, die in den oberen Seitenabschnitten des Bodenprofils (40) ausgebildet ist und sicherstellt, dass die Bodenplatte (30) und das Bodenprofil (40) formschlüssig miteinander verbunden werden können.

14. Bodenstruktur (A) nach Anspruch 1, wobei sie die untere Bodenprofil-Auflagefläche (44) umfasst, die sicherstellt, dass der elastische Keil (50) im Bodenprofil (40) auf einer ebenen Fläche sitzt.

15. Bodenstruktur (A) nach Anspruch 1, wobei sie den keiltragenden Überhang (45) umfasst, der sicherstellt, dass das Bodenprofil (40) und der elastische Keil (50) im Verriegelungsverfahren geometrisch gegenseitig getragen werden.

16. Bodenstruktur (A) nach Anspruch 1, wobei sie den äußeren Bodenprofil-Gleitflächenüberhang (46) umfasst, der nach der Verbindung des Bodenprofils (40) und der Bodenplatte (30) verhindert, dass diese Teile gegenseitig ineinandergreifen und sich der Formschluss unter Lasteinwirkung verschlechtert.

17. Bodenstruktur (A) nach Anspruch 4, wobei sie die innere Bodenprofil-Gleitfläche (47) umfasst, die sicherstellt, dass die Lagerklinke (314), durch Drücken von oben, gleitet und in den inneren den Bodenprofil-Gleitflächenüberhang (42) eingreift.

18. Bodenstruktur (A) nach Anspruch 4, wobei sie die Klinkenaussparung (48) umfasst, in der die Lagerklinken (314) sitzen, indem sie im oberen Mittelabschnitt des Bodenprofils (40) eine nach innen gerichtete Krümmung ergibt.

## Revendications

1. Structure de plancher (A), qui est positionnée sur le châssis de benne basculante (20) dans les camions à benne basculante de type boîte (1), et forme le plancher de la cuve à benne basculante (10) où la charge à transporter est stockée ; et raccordé à la cale de retenue élastique (50) placé sur le châssis de benne basculante mentionné (20), et absorbe les vibrations à transmettre à la cuve à benne basculante (10), celle-ci comprenant ;
• le panneau de plancher solide (30), qui s'étend transversalement sur le sol de la cuve à benne basculante (10), et ayant été positionné et combiné côte à côte sur tout le plancher, forme la structure de plancher (A) de la cuve à benne basculante (10),
• le profil de plancher (40), qui relie les panneaux de plancher (30) mentionnés, et en les raccordant à la cale de retenue élastique (50), positionnée sur le châssis de benne basculante (20),
• ledit panneau de plancher (30) comprenant la section latérale (31) de panneau de plancher, qui est la section où il est combiné avec le profil de plancher (40), et sur laquelle les éléments de verrouillage sont formés, **caractérisée en ce que**
ledit profil de plancher (40) comprend la décharge de flexion centrale (311), qui est formée dans les sections latérales (31) de panneau de plancher afin de s'assurer qu'il effectue une flexion élastique sous l'effet de la force qu'il applique au panneau de plancher (30), ainsi il est entrecroisé, et pour réduire le poids de la section de profil.

2. Structure de plancher (A) selon la revendication 1, celle-ci comprenant une gorge d'appui latérale (312), qui est formée au niveau de la partie d'extrémité d'un côté des sections latérales (31) de panneau de plancher,
et s'assurant que les panneaux de plancher (30) sont portés l'un contre l'autre géométriquement avec le procédé d'interverrouillage.

3. Structure de plancher (A) selon la revendication 2, ledit profil de plancher (40) comprenant la décharge de flexion de bord (313), qui est formée dans les sections latérales (31) de panneau de plancher afin d'assurer qu'il effectue une flexion élastique sous l'effet de la force qu'il applique au panneau de plancher (30), donc il est entrecroisé, et afin de réduire le poids de section de profil.

4. Structure de plancher (A) selon la revendication 2, celle-ci comprenant le cliquet d'appui (314), qui assure que le profil de plancher (40) est porté géométriquement sur le panneau de plancher (30), et ils sont reliés avec un raccord de forme, et qui sont formés au niveau des sections d'extrémité du panneau de plancher (30).

5. Structure de plancher (A) selon la revendication 4, celle-ci comprenant le porte-à-faux d'appui latéral (315), qui est logé dans ladite gorge d'appui latérale (312), formé dans l'autre partie latérale (31) de panneau de plancher du panneau de plancher (30).

6. Structure de plancher (A) selon la revendication 1, celle-ci comprenant la section de renfort central (32) de panneau de plancher, qui est formée dans la section médiane dudit panneau de plancher (30), et satisfait aux exigences de résistance aux impacts, de déformation et d'endurance du panneau de plancher (30).

7. Structure de plancher (A) selon la revendication 6, celle-ci comprenant la surface mince (321) de panneau de plancher, qui est située sur le dessus de ladite section de renfort centrale (32) de panneau de plancher, et supporte les effets d'impact, d'usure et de force de la charge dans la section de renfort central (32) de panneau de plancher.

8. Structure de plancher (A) selon la revendications 6, celle-ci comprenant la partie transversale intermédiaire (322) de panneau de plancher, qui satisfait aux exigences de résistance aux impacts, de déformation et d'endurance entre 2 panneaux de plancher (30), qui est intégrée dans la section de renfort central (32) de profil de plancher.

9. Structure de plancher (A) selon les revendications 7 et 8, celle-ci comprenant le renfort de partie transversale (323), qui est placé entre ladite surface mince (321) de panneau de plancher et la partie transversale intermédiaire (322) de panneau de plancher à des fins de support.

10. Structure de plancher (A) selon la revendication 6, celle-ci comprenant la surface épaisse (324) de panneau de plancher, qui est située entre les sections latérales (31) de panneau de plancher et la section de renfort centrale (32) de panneau de plancher, et supporte les effets d'impact, de l'usure et de force de la charge.

11. Structure de plancher (A) selon la revendication 1, celle-ci comprenant la surface d'assise supérieure (41) de profil de plancher, qui assure que le panneau de plancher (30) siège dans le profil de plancher (40) sur une surface plane, et qui est la partie supérieure du profil de plancher (40).

12. Structure de plancher (A) selon la revendication 4, celle-ci comprenant le porte-à-faux de surface de glissement interne (42) de profil de plancher, qui fournit un raccord de forme géométrique avec le cliquet d'appui (314), assurant ainsi un raccord sans joint entre le panneau de plancher (30) et le profil de plancher (40).

13. Structure de plancher (A) selon la revendication 1, celle-ci comprenant la surface de glissement externe (43) de profil de plancher, qui est formée dans les sections latérales supérieures dudit profil de plancher (40), et assure que le panneau de plancher (30) et le profil de plancher (40) peuvent être reliés avec un raccord de forme.

14. Structure de plancher (A) selon la revendication 1, celle-ci comprenant la surface d'assise inférieure (44) de profil de plancher, qui assure que ledit cale de retenue élastique (50) siège dans le profil de plancher (40) sur une surface plane.

15. Structure de plancher (A) selon la revendication 1, celle-ci comprenant le porte-à-faux de support (45) de cale de retenue, qui assure que ledit profil de plancher (40) et la cale de retenue élastique (50) sont portés l'un contre l'autre géométriquement avec le procédé d'interverrouillage.

16. Structure de plancher (A) selon la revendication 1, celle-ci comprenant le porte-à-faux de surface de glissement externe (46) de profil de plancher, qui, après le raccordement dudit profil de plancher (40) et du panneau de plancher (30), empêche ces parties de s'interverrouiller les unes avec les autres, et la détérioration du raccord de forme sous l'effet de la charge.

17. Structure de plancher (A) selon la revendication 4, celle-ci comprenant la surface de glissement interne (47) de profil de plancher, qui assure que, du fait d'avoir été pressé par le haut, ledit cliquet d'appui (314) coulisse et se met en prise dans le porte-à-faux de surface de glissement interne (42) de profil de plancher.

18. Structure de plancher (A) selon la revendication 4, celle-ci comprenant l'évidement de cliquet (48), dans lequel les cliquets d'appui (314) siègent en donnant une courbure vers l'intérieur dans la section médiane supérieure dudit profil de plancher (40).
